# EUROPEAN PATENT APPLICATION

(11) **EP 2 921 527 A1**
(43) Date of publication of application: **23.09.2015**
(21) Application number: 13854871.4
(22) Date of filing: 24.10.2013
(51) Int. Cl.: C08L 83/06, C08K 3/00, C08K 5/5415, C08K 5/544

(54) **ROOM-TEMPERATURE-CURABLE POLYORGANOSILOXANE COMPOSITION**

(30) Priority: 13.11.2012 JP 2012248991
(71) Applicant: Momentive Performance Materials Japan LLC, Tokyo 107-6112 (JP)
(72) Inventor: KUMAR Prakash, Tokyo 107-6112 (JP); IIDA Isao, Tokyo 107-6112 (JP)
(74) Representative: Wallace, Sheila Jane
(86) International application number: PCT/JP2013/078799
(87) International publication number: WO 2014/077100

(57) **Abstract**

There is provided a room-temperature-curable polyorganosiloxane composition that provides a cured product having little decrease in hardness at high temperature and high humidity, and is excellent in adhesiveness to various base materials. The composition is a two-part room-temperature-curable polyorganosiloxane composition including a main agent composition (A) and a curing agent composition (B). The main agent composition (A) contains, at a predetermined ratio, (c) polyorganosiloxane having a resin structure represented by an average unit formula: (R¹₃SiO_{1/2})ₚ[Si(OH)ₓO_{(4-x)/2}]_{q}. The curing agent composition (B) contains (e) a trifunctional or tetrafunctional silane compound or a partial hydrolysis condensate thereof and (f) an amino group-containing silicon compound.

## Description

### FIELD

The present invention relates to a condensation reaction type polyorganosiloxane composition that is cured at room temperature to generate a rubbery elastic body.

### BACKGROUND

For use as an adhesive and sealing material, a potting material, an FIPG (Formed In Place Gasket) sealing material for solar system parts, automobile parts, and electric and electronic equipment parts and so on, a condensation reaction type silicone rubber composition is widely used which comes into contact with moisture in air and is thereby cured at room temperature to generate a rubbery elastic body.

However, a conventional condensation reaction type silicone rubbery composition has a problem of a significant decrease in physical properties such as hardness and the like due to progress of hydrolysis of rubber being a cured product in an atmosphere of high temperature and high humidity.

As a non-solvent type room-temperature-curable silicone composition, a two-part condensation reaction type silicone composition containing polyorganosiloxane composed of a monofunctional siloxy unit (M unit) represented by a formula: R₃SiO_{1/2} and a tetrafunctional siloxy unit (Q unit) represented by a formula: SiO_{4/2} is known (for example, refer to Patent Reference 1).

However, the composition of Patent Reference 1 cannot provide cured rubber excellent in physical properties because of a low viscosity of a silanol terminated diorganosiloxane polymer being a base and a low content of a filler. Further, this composition has an insufficient effect of improving the hydrolysis resistance of a cured product and is thus considered to cause a decrease in viscosity of the cured product at high temperature and high humidity.

Further, to improve the heat resistance, a condensation reaction curing type silicone composition containing polyorganosiloxane including a trifunctional siloxy unit (T unit) represented by a formula: R₁SiO_{3/2} and/or a tetrafunctional siloxy unit (Q unit) is known (for example, refer to Patent Reference 2). However, the composition of Patent Reference 2 has a problem of a great decrease in hardness and so on of a cured product in an atmosphere of high temperature and high humidity.

Here, the monofunctional siloxy unit, the trifunctional siloxy unit, and the tetrafunctional siloxy unit are sometimes expressed as an M unit, a T unit, and a Q unit that are abbreviated expressions commonly used in this field. Further, a bifunctional siloxy unit represented by a formula: R₂SiO_{2/2} is sometimes expressed as a D unit. Note that in the formula representing a siloxy unit, R represents an organic group.

### RELEVANT REFERECNES

### Patent References

Patent Reference 1: JP-A 57-165453
Patent Reference 2: JP-A 56-049755

### DISCLOSUE OF THE INVENTION

### PROBLEMS TO BE SOLVED BY THE INVENTION

The present invention has been made to solve such problems in the prior art and its object is to provide a room-temperature-curable polyorganosiloxane composition that has excellent curability that a cured product has little or no decrease in hardness in an atmosphere of high temperature and high humidity, and is excellent in adhesiveness to various base materials.

### MEANS FOR SOLVING THE PROBLEMS

A room-temperature-curable polyorganosiloxane composition in the present invention being a two-part composition includes
a main agent composition (A) which contains:
(a) 100 parts by mass of polyorganosiloxane having a molecular end blocked with a hydroxyl group and having a viscosity at 23°C of 0.1 Pa• s to 100 Pa• s;
(b) 1 part by mass to 300 parts by mass of a filler; and
(c) 0.1 parts by mass to 20 parts by mass of polyorganosiloxane represented by an average unit formula (1),

   (R¹₃SiO_{1/2})ₚ[Si(OH)ₓO_{(4-x)/2}]_{q} (1)
where R¹s are monovalent hydrocarbon groups having 1 to 20 carbon atoms which are the same or different, "x" is 0.001 to 0.8, and both of "p" and "q" are positive numbers; and
a curing agent composition (B) containing:
(e) 0.1 parts by mass to 20 parts by mass of a trifunctional or tetrafunctional silane compound represented by a general formula(2) or a partial hydrolysis condensate thereof,

   R²ₙSi(OR³)₄₋ₙ (2)

   where R² is substituted or unsubstituted monovalent hydrocarbon group which are the same or different, R³s are unsubstituted monovalent hydrocarbon groups which are the same or different, and "n" is 0 or 1;
(f) 0.1 parts by mass to 20 parts by mass of at least one kind of amino group-containing silicon compound selected from the group consisting of a first amino group-containing silicon compound represented by a general formula(3) and a second amino group-containing silicon compound represented by a general formula(4),

   (R⁴O)₃Si-R⁵-NH-R⁶ (3)

   where R⁴s are unsubstituted monovalent hydrocarbon groups which are the same or different, R⁵ is a substituted or unsubstituted bivalent hydrocarbon group, R⁶ is a hydrogen atom, an unsubstituted monovalent hydrocarbon group, or an aminoalkyl group,

   (R⁷O)₃₋ₘR⁸ₘSi-R⁹-NH-R⁹-SiR⁸₁(OR⁷)₃₋₁ (4)

   where R⁷s are unsubstituted monovalent hydrocarbon groups which are the same or different, R⁸s are substituted or unsubstituted monovalent hydrocarbon groups which are the same or different, R⁹s are substituted or unsubstituted bivalent hydrocarbon groups which are the same or different, and "m "and "1" are integers of 0 to 2; and
(g) 0.01 parts by mass to 10 parts by mass of a tin-based curing catalyst.

Note that in this description, a tetrafunctional siloxy unit represented by a formula: Si(OH)ₓO_{(4-x)/2} is expressed as a Q^{OH} unit. Further, polyorganosiloxane having the Q^{OH} unit is called polyorganosiloxane having a resin structure (three-dimensional network structure).

### EFFECT OF THE INVENTION

The room-temperature-curable polyorganosiloxane composition in the present invention provides a cured product that is excellent in curability and has sufficient hardness, the cured product is excellent in hydrolysis resistance, and has little or no decrease in hardness even at high temperature and high humidity. Further, the room-temperature-curable polyorganosiloxane composition in the present invention is also excellent in adhesiveness to various base materials.

### DETAILED DESCRIPTION

Hereinafter, an embodiment of the present invention will be described. A room-temperature-curable polyorganosiloxane composition in the embodiment of the present invention is a two-part (two-component) composition composed of a main agent composition (A) and a curing agent composition (B).

The main agent composition (A) contains (a) polyorganosiloxane having a molecular end blocked with a hydroxyl group, (b) a filler, and (c) polyorganosiloxane having a resin structure. The curing agent composition (B) contains (e) a trifunctional or tetrafunctional silane compound or its partial hydrolysis condensate, (f) an amino group-containing silicon compound, and (g) a tin-based curing catalyst. The main agent composition (A) can contain (d) polyorganosiloxane having a molecular end blocked with a vinyl group and/or a methyl group. The curing agent composition (B) may contain (h) polyorganosiloxane having a molecular end blocked with a vinyl group and/or a methyl group.

Hereinafter, components constituting the main agent composition (A) and the curing agent composition (B) will be described.

### <(a) Polyorganosiloxane having an end blocked with a hydroxyl group>

In the room-temperature-curable polyorganosiloxane composition of the embodiment, the polyorganosiloxane having a molecular end blocked with a hydroxyl group being the (a) component is a main component of the main agent composition (A), and representatively is substantially linear polyorganosiloxane represented by the following general formula (5).

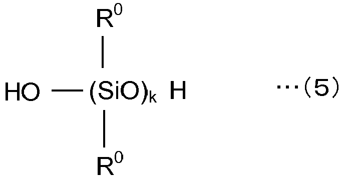

In the formula (5), a plurality of R⁰s are substituted or unsubstituted monovalent hydrocarbon groups which maybe the same as or different from each other. Examples of R⁰ are: alkyl groups such as a methyl group, an ethyl group, a propyl group, a butyl group, a pentyl group, a hexyl group, an octyl group, a decyl group, and a dodecyl group; cycloalkyl groups such as a cyclohexyl group; alkenyl groups such as a vinyl group and an allyl group; aryl groups such as a phenyl group, a tolyl group, and a xylyl group; aralkyl groups such as a benzyl group, a 2-phenylethyl group, and a 2-phenylpropyl group; and groups, in which part of hydrogen atoms of these hydrocarbon groups are substituted by other atoms or groups such as a halogen atom, a cyano group and the like, for example: halogenated alkyl groups such as a chloromethyl group, a 3-chloropropyl group, and a 3,3,3-trifluoropropyl group; cyano-alkyl groups such as a 3-cyanopropyl group; halogenated aryl groups such as a p-chlorophenyl group, and so on. 85% or more of all of R⁰s are preferably methyl groups, and more preferably, substantially all of R⁰s are methyl groups, because of easy synthesis, low viscosity relative to molecular weight, giving excellent extrusion property to the composition before curing, and giving a good physical property to the composition after curing.

On the other hand, R⁰s can be arbitrarily selected depending on the purpose, such that the aryl group is used as part of R⁰s especially when giving heat resistance, radiation resistance, cold resistance or transparency, the 3,3,3-trifluoropropyl group or the 3-cyanopropyl group is used as part of R⁰s when giving oil resistance, solvent resistance, or a long-chain alkyl group or an aralkyl group is used as part of R⁰s when giving paintability to the surface, together with the methyl group.

The hydroxyl group amount of the (a) component is preferably 0.01 mmol/g to 0.3 mmol/g, and more preferably 0.02 mmol/g to 0.08 mmol/g. Further, the polyorganosiloxane being the (a) component has a viscosity at 23°C of 0.1 Pa • s to 100 Pa • s. Accordingly, "k" in the formula (5) is a number (integer) to make the viscosity at 23 °C of polyorganosiloxane fall within the above-described range. When the viscosity at 23°C of the (a) component is less than 0.1 Pa• s, the stretch of a cured product is insufficient, whereas when it exceeds 100 Pa• s, workability such as discharge property and flow characteristics decrease. From the viewpoint of matching the physical properties required to the compositions before curing and after curing, a preferable viscosity of the (a) component is 0.5 Pa• s to 50 Pa• s.

As the (a) component, one kind of polyorganosiloxane having the both molecular ends blocked with hydroxyl groups and having the above-described viscosity can be selected for use. Further, the (a) component may be made by mixing two or more kinds of polyorganosiloxanes different in viscosity together and adjusting the viscosity of the mixture to fall within the above-described range (0.1 Pa• s to 100 Pa• s). Using the two or more kinds of polyorganosiloxanes different in viscosity in combination provides advantages that the adjustment to a desired viscosity becomes easy and the range of the viscosity of usable polyorganosiloxane is widened.

### <(b) Filler>

In the room-temperature-curable polyorganosiloxane composition of the embodiment, the filler being the (b) component serves to give consistency to the room-temperature-curable composition and give a mechanical strength to the cured product, and is compounded in the main agent composition (A). Examples of the (b) filler include alkali earth metal salt, inorganic oxide, metal hydroxide, carbon black and so on.

Examples of the alkali earth metal salt include carbonates, bicarbonates, sulfates, and the like of calcium, magnesium, and barium. Examples of the inorganic oxide include fumed silica, baked silica, precipitated silica, quartz fine powder, titanium oxide, iron oxide, zinc oxide, diatomaceous earth, alumina and so on. Examples of the metal hydroxide include aluminum hydroxide and so on. Further, the alkali earth metal salt, inorganic oxide, or metal hydroxide whose surface is treated with silanes, silazanes, low-polymerization degree siloxanes, or organic compounds may be used.

As the (b) filler, use of calcium carbonate is preferable. Using calcium carbonate as the (b) filler makes it possible to give high flowability to the composition before curing and give high mechanical strength to the cured product. A particle diameter (mean primary particle diameter) of calcium carbonate is preferably in a range of 0.001 µm to 10 µm. When the mean primary particle diameter of calcium carbonate exceeds 10 µm, not only the mechanical property of the cured product decreases but also the stretch property of the cured product becomes insufficient. When the mean primary particle diameter is less than 0.001 µm, the composition before curing increases in viscosity and decreases in flowability. Note that the mean primary particle diameter in this description is a mean primary particle diameter measured by the BET method unless otherwise noted.

Further, as such calcium carbonate, the one having surface treated with a fatty acid such as stearic acid or palmitic acid, rosin acid, an ester compound, a silicate compound or the like may be used in addition to the one having surface untreated. In the case of using the calcium carbonate subjected to surface treatment with a fatty acid or the like, the dispersibility of calcium carbonate is improved, resulting in improved processability of the composition. As the surface treatment agent, use of stearic acid or rosin acid is preferable. Further, use of the surface-treated calcium carbonate as the (b) component leads to expectation of improvement in adhesiveness of the cured product obtained by curing the composition to a base material.

Note that the rosin acid is a general term of carboxylic acids constituting natural resins, such as abietic acid, neoabietic acid, palustiic acid, levopimaric acid, dihydroabietic acid, tetrahydroabietic acid, pimric acid, isopimaric acid, dehydroabietic acid and so on. In the present invention, the rosin acid which is usually used as the surface treatment agent for the filler can be used without any particular restriction. Further, the rosin acid includes the one composed of a single component of the above-described carboxylic acid and the one containing two or more kinds, and also the ones obtained by performing disproportionation, hydrogenation and dehydrogenation on them.

As the surface-treated calcium carbonate, a commercial item can be used. Examples of the commercial item include Viscoexcel-30 (trade name, manufactured by Shiraishi Kogyo Corporation, a mean primary particle diameter of 80 nm (a mean primary particle diameter by electron microscope observation of 30 nm)), Hakuenka CCR (trade name, manufactured by Shiraishi Kogyo Corporation, a mean primary particle diameter of 120 nm (a mean primary particle diameter by electron microscope observation of 80 nm)), and so on.

The compounding amount of the (b) filler is 1 part by mass to 300 parts by mass with respect to 100 parts by mass of the (a) component, and preferably 5 parts by mass to 100 parts by mass. When the compounding amount is less than 1 part by mass, the effect of reinforcement and the like by the compounding cannot be sufficiently obtained, whereas when it exceeds 300 parts by mass, the workability such as discharge property and flow characteristics decrease.

### <(c) Polyorganosiloxane having a resin structure>

In the embodiment, the polyorganosiloxane being the (c) component contained in the main agent composition (A) is polyorganosiloxane having a resin structure (three-dimensional network structure) represented by an average unit formula (1).

(R¹₃SiO_{1/2})ₚ[Si(OH)ₓO_{(4-x)/2}]_{q} (1)

In the formula (1), R¹s are monovalent hydrocarbon groups having 1 to 20 carbon atoms or hydroxyl groups which may be the same as or different from each other. Examples of the monovalent hydrocarbon group having 1 to 20 carbon atoms are: alkyl groups such as a methyl group, an ethyl group, a propyl group, a butyl group, a pentyl group, a hexyl group, an octyl group, a decyl group, and a dodecyl group; cycloalkyl groups such as a cyclohexyl group; alkenyl groups such as a vinyl group and an allyl group; aryl groups such as a phenyl group, a tolyl group, and a xylyl group; and aralkyl groups such as a benzyl group, a 2-phenylethyl group, and a 2-phenylpropyl group. The monovalent hydrocarbon group is preferably an alkyl group, an alkenyl group, and an aryl group, and more preferably a methyl group, a vinyl group, and a phenyl group.

Further, both of "p" and "q" are positive numbers. The values of "p" and "q" are calculated from a mass average molecular weight and a value of p/q which will be described later. Therefore, limiting the mass average molecular weight and the value of p/q eliminates the need to individually limit "p", "q", but the value of "p" is preferably 10 to 50 and the value of "q" is preferably 10 to 50.

In the polyorganosiloxane having a resin structure being the (c) component, the molar ratio (value ofp/q) between the above-described (R¹₃SiO_{1/2}) unit (M unit) and the above-described [Si(OH)ₓO(₄₋ₓ)_{/2}] unit (Q^{OH} unit) is preferably 0.4 to 1.2 from the viewpoint of stability. When p/q is less than 0.4, the stability of the main agent composition (A) is insufficient because of insufficient solubility of the (c) component. When p/q exceeds 1.2, a cured product having sufficient stability cannot be obtained because of insufficient cross-linking in the (c) component.

Further, "x" that is the mean value of the number of hydroxyl groups (OH) in the Q^{OH} unit is 0.001 to 0.8, and the content of hydroxyl groups in the polyorganosiloxane having a resin structure (three-dimensional network structure) being the (c) component is preferably 0.01 mass% to 10 mass% with respect to the whole (c) component. Since the hydroxyl group reacts and cross-links with the alkoxy group, the cured product becomes brittle and more likely to break when the content ratio of the hydroxyl groups is too high, whereas the cured product becomes more likely to be softened after a lapse of a long time when the content ratio of the hydroxyl groups is too low.

Further, a mass average molecular weight (Mw) of the (c) component is preferably in a range of 500 to 20000, and more preferably in a range of 500 to 10000. Note that the mass average molecular weight (Mw) is obtained by GPC (gel permeation chromatography) based on polystyrene.

It is only necessary to use a known method as a manufacturing method of the polyorganosiloxane having a resin structure being the (c) component. A method described in USP 3,205,283 can also be used. For example, a method of combining compounds being respective unit sources at the above-described ratio, then co-hydrolyzing the compounds in the presence of acid or alkali, and subsequently condensing them. can be exemplified.

The compounding amount of the (c) component is 0.1 parts by mass to 20 parts by mass with respect to 100 parts by mass of the (a) component, and preferably 1 part by mass to 15 parts by mass. When the compounding amount is less than 0.1 parts by mass, the effect of improving the decrease in hardness of the cured product at high temperature and high humidity cannot be sufficiently obtained. When it exceeds 20 parts by mass, physical properties such as the elasticity, hardness and so on of the cured product decrease.

### < (d) Polyorganosiloxane having an end blocked with a methyl group or the like>

To adjust the viscosity of the main agent composition (A) and room-temperature-curable polyorganosiloxane to be finally obtained and to facilitate compounding of the (b) filler, it is preferable to compound (d) polyorganosiloxane having a molecular end blocked with a vinyl group and/or a methyl group, in the main agent composition (A). Examples of the (d) component include linear polydimethylsiloxane having the both molecular ends blocked with trimethylsilyl groups, linear polydimethylsiloxane having the both molecular ends blocked with vinyldimethylsilyl groups, and so on.

The viscosity of the (d) component at 23°C is preferably in a range of 0.1 Pa• s to 100 Pa• s. The viscosity of the (d) component is preferably lower than the viscosity of the (a) component to make adjustment of the viscosity of the main agent composition (A) easy. The compounding amount of the (d) component is adjusted so that the main agent composition (A) has a desired viscosity, and is preferably 0.1 parts by mass to 100 parts by mass with respect to 100 parts by mass of the (a) component, and more preferably 5 parts by mass to 50 parts by mass.

### < (e) Silane compound or its partial hydrolysis condensate>

In the room-temperature-curable polyorganosiloxane composition of the embodiment, the trifunctional or tetrafunctional silane compound represented by the formula (2) or its partial hydrolysis condensate being the (e) component acts as a cross-linking agent for the (a) component and the (c) component.

R²ₙSi(OR³)₄₋ₙ (2)

In the formula (2), "n" is 0 or 1.

In the formula (2), R² is substituted or unsubstituted monovalent hydrocarbon groups which may be the same as or different from each other. The same groups as the above-described groups of R⁰ in the formula (5) representing the (a) component are exemplified. All the description regarding R⁰ also applies to R². R³s are unsubstituted monovalent hydrocarbon groups which may be the same as or different from each other. Examples of R³ are alkyl groups such as a methyl groups, an ethyl groups, a propyl group, a butyl groups, a pentyl groups, a hexyl groups, an octyl group, a decyl group, and a dodecyl group. R² and R³ are preferably a methyl group, an ethyl groups, or a propyl group.

Such a partial hydrolysis condensate of the trifunctional or tetrafunctional silane compound preferably has a number of Si atoms in one molecule of 3 to 20, and more preferably 4 to 15. When the number of Si atoms is less than 3, a sufficient curability cannot be obtained in some cases. On the other hand, when the number of Si atoms exceeds 20, the curability and the mechanical property after curing decrease. As for the silane compound or its partial hydrolysis condensate being the (e) component, one kind may be used individually or two or more kinds may be used in a mixed manner. As the (e) component, a tetrafunctional silane compound is preferable, and its partial hydrolysis condensate is more preferable.

The compounding amount of the (e) component is 0.1 parts by mass to 20 parts by mass with respect to 100 parts by mass of the (a) component in the main agent composition (A), and preferably 1 part by mass to 5 parts by mass. When the compounding amount is less than 0.1 parts by mass, sufficient cross-linking is not performed, resulting in not only a cured product low in hardness but also a composition having the cross-linking agent compounded therein poor in storage stability. When it exceeds 20 parts by mass, the shrinkage percentage during curing increases, resulting in decreased physical properties such as elasticity, hardness and so on of the cured product.

### < (f) Amino group-containing silicon compound>

In the room-temperature-curable polyorganosiloxane composition of the embodiment, an amino group-containing silicon compound being the (f) component is at least one kind of amino-functional alkoxysilane selected from a groups consisting of a first amino group-containing silicon compound (f-1) represented by a formula(3) and a second amino group-containing silicon compound (f-2) represented by a formula(4).

(R⁴O)₃Si-R⁵-NH-R⁶ (3)

(R⁷O)₃₋ₘR⁸ₘSi-R⁹-NH-R⁹-SiR⁸₁(OR⁷)₃₋₁ (4)

These amino-functional alkoxysilanes act as a cross-linking agent for the (a) component and the (d) component. Further, they also serve to improve the adhesiveness of the composition.

### (f-1) First amino group-containing silicon compound

In the formula (3) representing the first amino group-containing silicon compound, R⁴s are unsubstituted monovalent hydrocarbon groups which may be the same or may be different, and the same groups as the above-described groups of R³ in the (e) component are exemplified. All the description regarding R³ also applies to R⁴. R⁵ is substituted or unsubstituted bivalent hydrocarbon groups which may be the same or may be different. Examples of R⁵ are: alkylene groups such as a methylene groups, an ethylene group, a propylene groups, a tetramethylene group, a hexamethylene group, and a methylethylene group; arylene groups such as a phenylene groups and a tolylene group; alkylene arylene groups such as a methylene phenylene group, and an ethylene phenylene group and so on. Among these hydrocarbon groups, alkylene groups such as a propylene groups, a tetramethylene group, a hexamethylene groups, and a methylethylene groups are preferable.

The reason is that when the arylene group such as a phenylene groups or a tolylene group or the alkylene arylene group such as a methylene phenylene groups or an ethylene phenylene group exists between the amino groups (-NH-) and the alkoxyl group bonded to the silicon atom, the reactivity of the alkoxyl groups decreases and the adhesiveness sometimes decreases.

Further, R⁶ is a hydrogen atom, an unsubstituted monovalent hydrocarbon groups, or an aminoalkyl group. Examples of the unsubstituted monovalent hydrocarbon groups are alkyl groups such as a methyl groups, an ethyl groups, a propyl group, a butyl groups and so on. Examples of the aminoalkyl groups are an aminoethyl groups, an N-aminoethylaminoethyl group and so on.

Concrete examples of the (f-1) first amino group-containing silicon compound include 3-aminopropyltriethoxysilane represented by the following formula (31), 3-aminopropyltrimethoxysilane represented by the formula (32), N-(2-aminoethyl)-3-aminopropyltrimethoxysilane represented by the formula (33), and so on.

(C₂H₅O)₃Si-C₃H₆-NH₂ (31)

(CH₃O)₃Si-C₃H₆-NH₂ (32)

(CH₃O)₃Si-C₃H₆-NH-C₂H₄NH₂ (33)

### (f-2) Second amino group-containing silicon compound

In the formula (4) representing the second amino group-containing silicon compound, R⁷s are unsubstituted monovalent hydrocarbon groups which maybe the same or may be different, and the same groups as the above-described groups of R⁴ in the (f-1) first amino group-containing silicon compound are exemplified. All the description regarding R⁴ also applies to R⁷. R⁸s are substituted or unsubstituted monovalent hydrocarbon groups which may be the same as or different from each other, and the same groups as the above-described groups of the of R² in the (e) component are exemplified. All the description regarding R² also applies to R⁸.

R⁹s are substituted or unsubstituted bivalent hydrocarbon groups which may be the same or may be different, and the same groups as the above-described groups of R⁵ in the (f-1) are exemplified. All the description regarding R⁵ also applies to R⁹. Further, "m" and "1" are integers of 0 to 2. It is preferable that "m" and "1" are 0. Further, both sides of the amino group are preferably the same.

Concrete examples of the (f-2) second amino group-containing silicon compound include bis-(3-trimethoxysilylpropyl)amine represented by the following formula (41), bis-(3-triethoxysilylpropyl)amine, and so on.

(CH₃O)₃Si-C₃H₆-NH- C₃H₆-Si(OCH₃)₃ (41)

Among the above (f) components, N-(2-aminoethyl)-3-aminopropyltrimethoxysilane represented by the formula (33), bis-(3-trimethoxysilylpropyl)amine represented by the formula (41) and the like are preferably used from the viewpoint of improving the adhesiveness to the base material of the cured product obtained by curing the composition. As for the amino group-containing silicon compound (amino-functional alkoxysilane) being the (f) component, one kind may be used individually or two or more kinds may be used in a mixed manner.

The compounding amount of the amino group-containing silicon compound being the (f) component is 0.1 parts by mass to 20 parts by mass with respect to 100 parts by mass of the (a) component, and more preferably 0.5 parts by mass to 10 parts by mass. When the compounding amount is less than 0.1 parts by mass, curing hardly occurs and development of the adhesiveness is also insufficient. When it exceeds 20 parts by mass, decreases in mechanical strength, adhesion reliability and heat resistance are sometimes caused.

### < (g) Tin-based curing catalyst>

The tin-based curing catalyst being the (g) component in the embodiment serves as a curing catalyst that promotes the reaction (curing reaction) with the (a) component and the (e) component and the like.

Examples of the tin-based catalyst include: organic acid (carboxylic acid) salts of tin such as tin caprylate and tin oleate; alkyltin carboxylic acid salts such as dibutyltin diacetate, dibutyltin dioctoate, dibutyltin dilaurate, dioctyltin dilaurate, dibutyltin dioleate, dimethyltin neodecanoate, dibutyltin neodecanoate, and diphenyltin diacetate; dialkyltin oxides such as dibutyltin oxide and dibutyltin dimethoxide; and dialkyltin dialkoxides such as dibutylbis(triethoxysiloxy)tin and dimethylbis[(1-oxoneodecyl) oxy] stannane.

The compounding amount of the tin-based catalyst being the (g) component is 0.01 parts by mass to 10 parts by mass with respect to 100 parts by mass of the (a) component, and more preferably 0.5 parts by mass to 10 parts by mass. When the compounding amount of the (g) tin-based catalyst is less than 0.01 parts by mass, curing hardly occurs. When it exceeds 10 parts by mass, decreases in mechanical strength and heat resistance are sometimes caused.

### < (h) Polyorganosiloxane having an end blocked with a methyl groups or the like>

To control the viscosity of the curing agent composition (B) and the like and adjust the compounding ratio of the curing agent composition (B) with respect to the main agent composition (A) to a desired value, the (h) polyorganosiloxane having a molecular end blocked with a vinyl groups and/or a methyl groups is preferably compounded in the curing agent composition (B). Examples of the (h) component include linear polydimethylsiloxane having the both molecular ends blocked with trimethylsilyl groups, linear polydimethylsiloxane having the both molecular ends blocked with vinyldimethylsilyl groups, and so on, similarly to the (d) component.

The viscosity of the (h) component at 23°C is preferably in a range of 0.1 Pa• s to 100 Pa• s, and more preferably in a range of 1 Pa• s to 10 Pa• s. The compounding amount of the (h) component is adjusted so that the curing agent composition (B) and the room-temperature-curable polyorganosiloxane to be finally obtained have a desired viscosity, and is preferably 0.1 parts by mass to 100 parts by mass with respect to 100 parts by mass of the (a) component, and more preferably 1 part by mass to 20 parts by mass.

### <Other components>

The room-temperature-curable polyorganosiloxane composition in the present invention exhibits excellent adhesiveness with respect to various base materials, and it is possible to compound a publically known adhesiveness improver therein so as to further increase the adhesiveness. Examples of the adhesiveness improver to be used include: an isocyanuric ring-containing silicon compound such as 1,3,5-tris(3-trimethoxysilylpropyl)isocyanurate; and epoxy group-containing silanes such as 3-glycidoxypropyltrimethoxysilane, 3-glycidoxypropylmethyldimethoxysilane, and so on.

These adhesiveness improvers are preferably compounded in the curing agent composition (B). The compounding amount of the adhesiveness improver is preferably 0.1 parts by mass to 10 parts by mass with respect to 100 parts by mass of the (a) component, and more preferably 0.5 parts by mass to 5 parts by mass.

Further, for viscosity adjustment or coloring, fillers such as silica, titanium oxide, carbon black, calcium carbonate, diatomaceous earth and the like may be compounded in the curing agent composition (B). The compounding amount of the fillers is preferably 1 part by mass to 100 parts by mass with respect to 100 parts by mass of the (a) component.

In the room-temperature-curable polyorganosiloxane composition of the embodiment, an additive that is generally compounded in this kind of composition can be compounded as necessary in a range not inhibiting the effects of the present invention. Examples of the additive include a pigment, a dye, a thixotropy imparting agent, an ultraviolet absorbent, an anti-mildew agent, a heat resistance improver and so on. These additives may be compounded in the main agent composition (A), may be compounded in the curing agent composition (B), or may be compounded both in the main agent composition (A) and the curing agent composition (B).

In the room-temperature-curable polyorganosiloxane composition in the present invention, the molar ratio (alkoxy groups/OH groups) between the total amount of alkoxy groups bonded to silicon atoms in the (e) component and the (f) component and the total amount of hydroxyl groups bonded to silicon atoms in the (a) component and the (c) component, is preferably 5 to 50 from the viewpoint of adhesiveness, curability and so on. The alkoxy groups/OH groups is more preferably 10 to 30, and particularly preferably 15 to 25.

The room-temperature-curable polyorganosiloxane composition in the present invention is prepared, divided into: the main agent composition (A) containing the (a) polyorganosiloxane having a molecular end blocked with a hydroxyl group, the (b) filler, the (c) polyorganosiloxane having a resin structure, and, as necessary, the (d) polyorganosiloxane having a molecular end blocked with a vinyl group and/or a methyl group; and the curing agent composition (B) containing the (e) trifunctional or tetrafunctional silane compound or its partial hydrolysis condensate, the (f) amino group-containing silicon compound, the (g) tin-based curing catalyst, and, as necessary, the (h) polyorganosiloxane having a molecular end blocked with a vinyl groups and/or a methyl group. Further, the main agent composition (A) and the curing agent composition (B) are used as a form in a so-called two-part (two-component) composition that the compositions are dividedly stored in separate containers and mixed and exposed to moisture in air to be cured at the time of use.

The room-temperature-curable polyorganosiloxane composition in the present invention is stable under a sealed condition without humidity, and is brought into contact with moisture in air and thereby cured at room temperature to generate a rubbery elastic body. In particular, according to the present invention, the composition is high in curing rate and excellent in deep-part curability, and exhibits excellent adhesiveness with respect to various base materials. In addition, the composition has such excellent features that the cured product is excellent in hydrolysis resistance, and the cured product has little or no decrease in hardness in an atmosphere of high temperature and high humidity.

Consequently, the composition in the present invention is useful as an elastic adhesive, a coating material, a potting material, an FIPG sealing material for solar parts, automobile parts, and electric and electronic equipment parts and so on, and useful also as an in-situ molded gasket, a building sealing material and so on.

### EXAMPLES

Hereinafter, the present invention will be concretely described using examples, but the present invention is not limited to these examples. Note that in each of examples and comparative examples, each "part" represents "part by mass" and all of the physical property values such as viscosity and so on represent values at 23°C and a relative humidity of 50%.

### (Example 1)

First, polyorganosiloxane composed of M units and Q^{OH} units (hereinafter, expressed as an MQ^{OH} resin) was manufacture as follows.

### [Manufacture of (c) MQ^{OH} resin]

100 parts of trimethylchlorosilane and 200 parts of sodium silicate were subjected to hydrolysis and subsequent condensation in a mixed solvent of water, IPA (isopropyl alcohol), and xylene. After stirring for 2 hours at 80°C or lower, the resultant was separated into an aqueous phase and an oil phase, and an xylene solution of the MQ^{OH} resin was obtained as the oil phase.

The obtained MQ^{OH} resin had a molar ratio (M/Q^{OH}) between M units and Q^{OH} units of 0.9, a mass average molecular weight (Mw) of 3000, and a content of hydroxyl groups of 0.2 mass%.

10.0 parts of the (d) polydimethylsiloxane having the both molecular ends blocked with trimethylsilyl groups (viscosity of 0.1 Pa• s) and 10.0 parts (solid content) of the xylene solution of the (c) MQ^{OH} resin obtained in the above were mixed into 100.0 parts of (a1) polydimethylsiloxane having the both molecular ends blocked with hydroxyl groups (viscosity of 10 Pa• s, hydroxyl group amount of 0.036 mmol/g), and a solvent therein was removed under a reduced pressure of 2 mmHg at 140°C, and then 80.0 parts of (b1) calcium carbonate surface-treated with stearic acid (Viscoexcel-30 (trade name, manufactured by Shiraishi Kogyo Corporation, a mean primary particle diameter of 80 nm)) was added thereto and mixed for 2 hours by a planetary mixer to obtain 200.0 parts of a main agent composition.

Further, 9.4 parts of the (h) polydimethylsiloxane having the both molecular ends blocked with vinyldimethylsilyl groups (viscosity of 3.0 Pa• s), 3.1 parts of carbon black, 2.0 parts of (e3) partial hydrolysis condensate of the silane compound (polyethyl silicate: number of Si atoms is 7) represented by a formula: Si(OC₂H₅)₄, 1.7 parts of (f4) N-(2-aminoethyl)-3-aminopropyltrimethoxysilane, 0.7 parts of 1,3,5-tris(3-trimethoxysilylpropyl)isocyanurate, and 0.1 parts of dimethylbis[(1-oxoneodecyl)oxy]stannane were mixed for 20 minutes using a planetary mixer to obtain 17.0 parts of a curing agent composition. Subsequently, 200.0 parts of the main agent composition and 17.0 parts of the curing agent composition were uniformly mixed using a static mixer to obtained a polyorganosiloxane composition.

### (Examples 2 to 13, Comparative Examples 1 to 7)

Components listed as main agent compositions in Tables 1 to 3 were compounded in compositions indicated in the tables, and mixed as in Example 1 to obtain the main agent compositions having the parts by mass indicated in total in the tables. Further, components listed as curing agent compositions in Tables 1 to 3 were compounded in compositions indicated in the tables, and mixed as in Example 1 to obtain the curing agent compositions having the parts by mass indicated in total in the tables. Then, the main agent compositions and the curing agent compositions thus obtained were uniformly mixed to obtain room-temperature-curable polyorganosiloxane compositions.

The molar ratios "alkoxy groups/OH groups" between the total amount of alkoxy groups bonded to silicon atoms in the (e) component and the (f) component and the total amount of hydroxyl groups bonded to silicon atoms in the (a) component and the (c) component in Examples 1 to 13 and Comparative Examples 1 to 7 are additionally listed in Tables 1 to 3.

Note that as an MDT^{OH} resin and the (a) component to the (f) component other than those used in Example 1 among the components listed in Tables 1 to 3, those described below were used. Note that the MDT^{OH} resin represents polyorganosiloxane composed of M units, D units, and T^{OH} units.

### [Manufacture of MDT^{OH} resin]

30 parts of methyltrichlorosilane, 100 parts of dimethyldichlorosilane, and 4 parts of trimethylchlorosilane were mixed and subjected to hydrolysis and subsequent condensation using water. After stirring for 4 hours at 30°C or lower, the resultant was separated into an aqueous phase and an oil phase, and the oil phase was neutralized with sodium bicarbonate to obtain a solution of the MDT^{OH} resin. The obtained MDT^{OH} resin was composed of 4 mol% of M units, 76 mol% of D units, and 20 mol% of T^{OH} units, and had a viscosity at 23°C of 70 mPa·s (cP). Further, the content of hydroxyl groups was 0.1 mass%.

### [(a) Component]

(a2) Polydimethylsiloxane having the both molecular ends blocked with hydroxyl groups (viscosity of 40 Pa• s, hydroxyl groups amount of 0.023 mmol/g)
(a3) Polydimethylsiloxane having the both molecular ends blocked with hydroxyl groups (viscosity of 5 Pa·s, hydroxyl groups amount of 0.041 mmol/g)

### [(b) Component)]

(b2) Calcium carbonate (manufactured by Nitto Funka Kogyo K.K., part number: NS#400, a mean primary particle diameter of 1.7 *µ*m)
(b3) Calcium carbonate surface-treated with stearic acid (Hakuenka CCR (trade name, manufactured by Shiraishi Kogyo Corporation, a mean primary particle diameter of 120 nm))

### [(e) Component]

(e1) Methyltrimethoxysilane SiCH₃(OCH₃)₃
(e2) Polymethyl silicate partial hydrolysis condensate of a silane compound represented by the formula: Si(OCH₃)₄ (polymethyl silicate: number of Si atoms is 4)

### [(f) Component]

(f1) Bis-(3-trimethoxysilylpropyl)amine
(f2) 3-aminopropyltriethoxysilane
(f3) 3-aminopropyltrimethoxysilane

### [Filler] Fumed silica (trade name: REOLOSIL HM-30S (manufactured by Tokuyama Corporation, hexamethyldisilazane surface-treated product))

Next, regarding the polyorganosiloxane compositions obtained in Examples 1 to 13 and Comparative Examples 1 to 7, the hardness (initial hardness and hardness after being left in an atmosphere of high temperature and high humidity) and adhesiveness of the cured product were evaluated by the following methods. Results are indicated in lower fields in Table 1 to Table 3.

### [Hardness]

The obtained polyorganosiloxane composition was dispensed and formed into a block shape of 6 mm, then left for 3 days in an atmosphere of 50% RH at 23°C to be cured. The hardness of thus obtained cured product (initial hardness) was measured by the type A hardness meter.

### [Hardness after being left in an atmosphere of high temperature and high humidity]

After the cured product obtained by curing in an atmosphere of 50% RH at 23°C was left for 30 days in an atmosphere of 80% RH at 80°C, the hardness of the cured product was measured by the type A hardness meter. Then, the change from the initial hardness was obtained.

### [Adhesiveness]

The polyorganosiloxane composition was applied in 50 mm length, 10 mm in width, 1 mm in thickness on surfaces of various base materials (aluminum, glass, PPO (polyphenylene oxide) and epoxy glass) and left for 3 days in an atmosphere of 50% RH at 23°C to be cured. Then, the cured product was scraped from the surface of the base material with a metal spatula, and the state of peeling of the cured product at this time was investigated. Then, the adhesiveness was evaluated under the following criteria.
Adhesiveness <good>: the cured product cannot be peeled from the interface (surface) of the base material and the cured product is broken.
Adhesiveness <moderate>: a part of the cured product is peeled from the interface (surface) of the base material and a part of the cured product is broken.
Adhesiveness <bad>: the cured product can be peeled from the interface (surface) of the base material.

**[Table 1]**

| | | | | Exam. 1 | Exam. 2 | Exam. 3 | Exam. 4 | Exam. 5 | Exam. 6 | Exam. 7 |
|---|---|---|---|---|---|---|---|---|---|---|
| Composition (Parts By Mass) | Main Agent Composition (A) | (a) | (a1) Polydimethylsiloxane Blocked With Hydroxyl Groups (Viscosity 10 Pa • s) | 100 | 100 | 100 | 100 | 100 | 100 | 100 |
| | | | (a2) Polydimethylsiloxane Blocked With Hydroxyl Groups (Viscosity 40 Pa • s) | - | - | - | - | - | - | - |
| | | | (a3) Polydimethylsiloxane Blocked With Hydroxyl Groups (Viscosity 5 Pa • s) | - | - | - | - | - | - | - |
| | | (d) | (d) Polydimethylsiloxane Blocked With Trimethylsilyl Groups (Viscosity 0.1 Pa • s) | 10 | 10 | 10 | 10 | 10 | 22 | 40 |
| | | (b) | (b1) Calcium Carbonate Treated With Stearic Acid (80 nm) | 80 | 80 | 80 | 80 | 80 | 80 | 80 |
| | | | (b2) Calcium Carbonate(1.7 µm) | - | - | - | - | - | - | - |
| | | | (b3) Calcium Carbonate Treated With Stearic Acid (120 nm) | - | - | - | - | - | - | - |
| | | (c) | (c) MQ^{OH} Resin (p/q) = 0.9, OH Group Content: 0.2 Mass% | 10 | 10 | 10 | 10 | 10 | 2 | 20 |
| | | Other | MDT^{OH} Resin | - | - | - | - | - | - | - |
| | | Total | | 200 | 200 | 200 | 200 | 200 | 204 | 240 |
| | Curing Agent Composition (B) | (h) | (h) Polydimethylsiloxane Blocked With Vinyldimethyl Groups (Viscosity 3.0 Pa• s) | 9.4 | 9.4 | 9.4 | 9.4 | 9.4 | 9.6 | 11.3 |
| | | Filler | Carbon Black | 3.1 | 3.1 | 3.1 | 3.1 | 3.1 | 3.2 | 3.7 |
| | | | Fumed Silica | - | - | - | - | - | - | - |
| | | | Titanium Oxide | - | - | - | - | - | - | - |
| | | | (e1) Methyltrimethoxysilane | - | - | - | - | - | - | - |
| | | (e) | (e2) Polymethyl Silicate (Number of Si atoms is 4) | - | - | - | - | - | - | - |
| | | | (e3) Polyethyl Silicate (Number of Si atoms is 7) | 2 | 2 | 2 | 2 | 2 | 2 | 2.4 |
| | | | (f1) Bis-(3-Trimethoxysilylpropyl)Amine | - | - | - | 1.7 | - | - | - |
| | | (f) | (f2) 3-Aminopropyltriethoxysilane | - | - | 1.7 | - | - | - | - |
| | | | (f3) 3-Aminopropyltrimethoxysilane | - | 1.7 | - | - | - | - | - |
| | | | (f4) N-(2-Aminoethyl)-3-Aminopropyltrimethoxysilane | 1.7 | - | - | - | 1.7 | 1.7 | 2 |
| | | Adhesiveness Improver | 1,3,5-Tris(3-Trimethoxysilylpropyl)Isocyanurate | 0.7 | 0.7 | 0.7 | 0.7 | - | 0.7 | 0.8 |
| | | (g) | (g) Dimethylbis[(1-Oxoneodecyl)Oxy]Stannane | 0.1 | 0.1 | 0.1 | 0.1 | 0.1 | 0.1 | 0.1 |
| | | Total | | 17 | 17 | 17 | 17 | 16.3 | 17.3 | 20.3 |
| | Alkoxy Groups/OH Groups | | | 18 | 20 | 18 | 20 | 15 | 18 | 21 |
| Property Evaluation | Hardness (Type A) | | | 24 | 25 | 25 | 25 | 21 | 26 | 16 |
| | Hardness (Type A) After 85°C/85% (30 Days) | | | 19 | 20 | 18 | 16 | 14 | 17 | 19 |
| | Hardness (Type A) Change | | | -5 | -5 | -7 | -9 | -7 | -9 | 3 |
| | | | Aluminum | good | good | good | good | good | good | good |
| | Adhesiveness Evaluation | | Glass | good | good | good | good | good | good | good |
| | | | PPO | good | moderate | bad | good | good | good | good |
| | | | Epoxy Glass | good | good | good | good | good | good | good |

| | | | | | | | | | | |
|---|---|---|---|---|---|---|---|---|---|---|
| Exam. 1 to Exam. 7 = Example 1 to Example 7 | | | | | | | | | | |

**[Table 2]**

| | | | | Exam. 8 | Exam. 9 | Exam. 10 | Exam. 11 | Exam. 12 | Exam. 13 |
|---|---|---|---|---|---|---|---|---|---|
| Composition (Parts By Mass) | Main Agent Composition (A) | (a) | (a1) Polydimethylsiloxane Blocked With Hydroxyl Groups (Viscosity 10 Pa • s) | 100 | 100 | - | 100 | 100 | 100 |
| | | | (a2) Polydimethylsiloxane Blocked With Hydroxyl Groups (Viscosity 40 Pa • s) | - | - | 30 | - | - | - |
| | | | (a3) Polydimethylsiloxane Blocked With Hydroxyl Groups (Viscosity 5 Pa • s) | - | - | 70 | - | - | - |
| | | (d) | (d) Polydimethylsiloxane Blocked With Trimethylsilyl Groups (Viscosity 0.1 Pa • s) | 10 | 10 | 10 | - | 10 | 10 |
| | | (b) | (b1) Calcium Carbonate Treated With Stearic Acid (80 nm) | 80 | - | 80 | 80 | 80 | - |
| | | | (b2) Calcium Carbonate(1.7 µm) | - | 80 | - | - | - | - |
| | | | (b3) Calcium Carbonate Treated With Stearic Acid (120 nm) | - | - | - | - | - | 80 |
| | | (c) | (c) MQ^{OH} Resin (p/q) = 0.9, OH Group Content: 0.2 Mass% | 10 | 10 | 10 | 10 | 10 | 10 |
| | | Other | MDT^{OH} Resin | - | - | - | - | - | - |
| | | Total | | Total | 200 | 200 | 190 | 200 | 200 |
| | Curing Agent Composition (B) | (h) | (h) Polydimethylsiloxane Blocked With Vinyldimethyl Groups (Viscosity 3.0 Pa • s) | 10 | 9.4 | 9.4 | - | 9.4 | 9.4 |
| | | Filler | Carbon Black | - | 3.1 | 3.1 | - | - | 3.1 |
| | | | Fumed Silica | 2.7 | - | - | - | - | - |
| | | | Titanium Oxide | 0.9 | - | - | - | - | - |
| | | (e) | (e1) Methyltrimethoxysilane | 0.7 | - | - | - | - | - |
| | | | (e2) Polymethyl Silicate (Number of Si atoms is 4) | 1.3 | - | - | - | - | - |
| | | | (e3) Polyethyl Silicate (Number of Si atoms is 7) | - | 2 | 2 | 2 | 2 | 2 |
| | | (f) | (f1) Bis-(3-Trimethoxysilylpropyl)Amine | - | - | - | - | - | - |
| | | | (f2) 3-Aminopropyltriethoxysilane | - | - | - | - | - | - |
| | | | (f3) 3-Aminopropyltrimethoxysilane | - | - | - | - | - | - |
| | | | (f4) N-(2-Aminoethyl)-3-Aminopropyltrimethoxysilane | 1.6 | 1.7 | 1.7 | 1.7 | 1.7 | 1.7 |
| | | Adhesiveness Improver | 1,3,5-Tris(3-Trimethoxysilylpropyl)Isocyanurate | 0.6 | 0.7 | 0.7 | 0.7 | 0.7 | 0.7 |
| | | (g) | (g) Dimethylbis[(1-Oxoneodecyl)Oxy]Stannane | 0.1 | 0.1 | 0.1 | 0.1 | 0.1 | 0.1 |
| | | Total | | 17.9 | 17 | 17 | 4.5 | 13.9 | 17 |
| | Alkoxy Groups/OH Groups | | | 21 | 18 | 18 | 18 | 18 | 18 |
| Property Evaluation | Hardness (Type A) | | | 25 | 26 | 24 | 27 | 21 | 22 |
| | Hardness (Type A) After 85°C/85% (30 Days) | | | 16 | 17 | 19 | 21 | 16 | 21 |
| | Hardness (Type A) Change | | | -9 | -9 | -5 | -6 | -5 | -1 |
| | | | Aluminum | good | good | good | good | good | good |
| | Adhesiveness Evaluation | | Glass | good | good | good | good | good | good |
| | | | PPO | good | bad | good | good | good | good |
| | | | Epoxy Glass | good | good | good | good | good | good |

| | | | | | | | | | |
|---|---|---|---|---|---|---|---|---|---|
| Exam. 8 to Exam. 13 = Example 8 to Example 13 | | | | | | | | | |

**[Table 3]**

| | | | | Comp. Exam.1 | Comp. Exam.2 | Comp. Exam.3 | Comp. Exam.4 | Comp. Exam.5 | Comp. Exam.6 | Comp. Exam.7 |
|---|---|---|---|---|---|---|---|---|---|---|
| Composition (Parts By Mass) | Main Agent Composition (A) | (a) | (a1) Polydimethylsiloxane Blocked With Hydroxyl Groups (Viscosity 10 Pa • s) | 100 | 100 | 100 | 100 | 100 | 100 | 100 |
| | | | (a2) Polydimethylsiloxane Blocked With Hydroxyl Groups (Viscosity 40 Pa • s) | - | - | - | - | - | - | - |
| | | | (a3) Polydimethylsiloxane Blocked With Hydroxyl Groups (Viscosity 5 Pa • s) | - | - | - | - | - | - | - |
| | | (d) | (d) Polydimethylsiloxane Blocked With Trimethylsilyl Groups (Viscosity 0.1 Pa • s) | 20 | 20 | 20 | 20 | 20 | 10 | 20 |
| | | (b) | (b1) Calcium Carbonate Treated With Stearic Acid (80 nm) | 80 | 80 | 80 | 80 | 80 | 80 | - |
| | | | (b2) Calcium Carbonate(1.7 µm) | - | - | - | - | - | - | - |
| | | | (b3) Calcium Carbonate Treated With Stearic Acid (120 nm) | - | - | - | - | - | - | 80 |
| | | (c) | (c) MQ^{OH} Resin (p/q) = 0.9, OH Group Content: 0.2 Mass% | - | - | - | - | - | - | - |
| | | Other | MDT^{OH} Resin | - | - | - | - | - | 10 | - |
| | | | Total | Total | 200 | 200 | 200 | 200 | 200 | 200 |
| | Curing Agent Composition (B) | (h) | (h) Polydimethylsiloxane Blocked With Vinyldimethyl Groups (Viscosity 3.0 Pa• s) | 9.4 | 9.4 | 9.4 | 9.4 | 10 | 9.4 | 9.4 |
| | | Filler | Carbon Black | 3.1 | 3.1 | 3.1 | 3.1 | - | 3.1 | 3.1 |
| | | | Fumed Silica | - | - | - | - | 2.7 | - | - |
| | | | Titanium Oxide | - | - | - | - | 0.9 | - | - |
| | | | (e1) Methyltrimethoxysilane | - | - | - | - | 0.7 | - | - |
| | | (e) | (e2) Polymethyl Silicate (Number of Si atoms is 4) | - | - | - | - | 1.3 | - | - |
| | | | (e3) Polyethyl Silicate (Number of Si atoms is 7) | 2 | 2 | 2 | 2 | - | 2 | 2 |
| | | | (f1) Bis-(3-Trimethoxysilylpropyl)Amine | - | - | - | 1.7 | - | - | - |
| | | (f) | (f2) 3-Aminopropyltriethoxysilane | - | - | 1.7 | - | - | - | - |
| | | | (f3) 3-Aminopropyltrimethoxysilane | - | 1.7 | - | - | - | - | - |
| | | | (f4) N-(2-Aminoethyl)-3-Aminopropyltrimethoxysilane | 1.7 | - | - | - | 1.6 | 1.7 | 1.7 |
| | | Adhesiveness Improver | 1,3,5-Tris(3-Trimethoxysilylpropyl)Isocyanurate | 0.7 | 0.7 | 0.7 | 0.7 | 0.6 | 0.7 | 0.7 |
| | | (g) | (g) Dimethylbis[(1-Oxoneodecyl)Oxy]Stannane | 0.1 | 0.1 | 0.1 | 0.1 | 0.1 | 0.1 | 0.1 |
| | | Total | | 17 | 17 | 17 | 17 | 17.9 | 17 | 17 |
| | Alkoxy Groups/OH Groups | | | 18 | 20 | 18 | 20 | 21 | 18 | 18 |
| Property Evaluation | Hardness (Type A) | | | 25 | 25 | 26 | 25 | 20 | 28 | 23 |
| | Hardness (Type A) After 85°C/85% (30 Days) | | | 7 | 7 | 8 | 8 | 1 | 13 | 9 |
| | Hardness (Type A) Change | | | -18 | -18 | -18 | -17 | -19 | -15 | -14 |
| | | | Aluminum | good | good | good | good | good | good | good |
| | Adhesiveness Evaluation | | Glass | good | good | good | good | good | good | good |
| | | | PPO | good | moderate | bad | bad | good | good | good |
| | | | Epoxy Glass | good | good | good | good | good | good | good |

| | | | | | | | | | | |
|---|---|---|---|---|---|---|---|---|---|---|
| Comp. Exam. 1 to Comp. Exam. 7 = Comparative Example 1 to Comparative Example 7 | | | | | | | | | | |

As is apparent from Table 1 to Table 3, the polyorganosiloxane compositions in Examples 1 to 13 each made by mixing the main agent composition (A) in which the components of (a) to (c) are compounded at a predetermined ratio, and the (d) component and so on are arbitrarily compounded, and the curing agent composition (B) in which components of (e) to (g) are compounded at a predetermined ratio, and the (h) component and so on are arbitrarily compounded, are excellent in curability, so that the cured products have sufficient hardness, and the cured products have little or no decrease in hardness even if they are left in an atmosphere of high temperature and high humidity. Further, the polyorganosiloxane compositions in Examples 1 to 13 have excellent adhesiveness to various base materials such as metal, glass, plastic, and epoxy glass.

In contrast to the above, the polyorganosiloxane compositions obtained in Comparative Examples 1 to 7 have no MQ^{OH} resin being the (c) component compounded therein, so that the cured products greatly decrease in hardness in an atmosphere of high temperature and high humidity. Further, the polyorganosiloxane composition prepared in Comparative Example 6 has an MDT resin compounded therein but no MQ^{OH} resin compounded therein, so that the cured product greatly decreases in hardness in an atmosphere of high temperature and high humidity.

### INDUSTRIAL APPLICABILITY

According to the room-temperature-curable polyorganosiloxane composition in the present invention, it is possible to obtain a cured product having sufficient hardness and having little decrease in hardness in an atmosphere of high temperature and high humidity. Further, it is possible to obtain a cured product excellent in adhesiveness to various base materials.
Consequently, the composition in the present invention is useful as an elastic adhesive, a coating material, a potting materials, an FIPG sealing material for solar parts, automobile parts, and electric and electronic equipment and so on, and useful also as an in-situ molded gasket, a building sealing material and so on.

## Claims

1. A room-temperature-curable polyorganosiloxane composition being a two-part composition, comprising:
a main agent composition (A) containing:
(a) 100 parts by mass of polyorganosiloxane having a molecular end blocked with a hydroxyl groups and having a viscosity at 23°C of 0.1 Pa• s to 100 Pa• s;
(b) 1 part by mass to 300 parts by mass of a filler; and
(c) 0.1 parts by mass to 20 parts by mass of polyorganosiloxane represented by an average unit formula (1),
(R¹₃SiO_{1/2})ₚ[Si(OH)ₓO_{(4-x)/2}]_{q} (1)
where R¹s are monovalent hydrocarbon groups having 1 to 20 carbon atoms which are the same or different, "x" is 0.001 to 0.8, and both of "p" and "q" are positive numbers; and
a curing agent composition (B) containing:
(e) 0.1 parts by mass to 20 parts by mass of a trifunctional or tetrafunctional silane compound represented by a general formula(2) or a partial hydrolysis condensate thereof,
R²ₙSi(OR³)₄₋ₙ (2)
where R² is substituted or unsubstituted monovalent hydrocarbon groups which are the same or different, R³s are unsubstituted monovalent hydrocarbon groups which are the same or different, and "n" is 0 or 1;
(f) 0.1 parts by mass to 20 parts by mass of at least one kind of amino group-containing silicon compound selected from the groups consisting of a first amino group-containing silicon compound represented by a general formula(3) and a second amino group-containing silicon compound represented by a general formula(4),
(R⁴O)₃Si-R⁵-NH-R⁶ (3)
where R⁴s are unsubstituted monovalent hydrocarbon groups which are the same or different, R⁵ is a substituted or unsubstituted bivalent hydrocarbon group, R⁶ is a hydrogen atom, an unsubstituted monovalent hydrocarbon group, or an aminoalkyl group,
(R⁷O)₃₋ₘR⁸ₘSi-R⁹-NH-R⁹-SiR⁸₁(OR')₃₋₁ (4)
where R⁷s are unsubstituted monovalent hydrocarbon groups which are the same or different, R⁸s are substituted or unsubstituted monovalent hydrocarbon groups which are the same or different, R⁹s are substituted or unsubstituted bivalent hydrocarbon groups which are the same or different, and "m "and "1" are integers of 0 to 2; and
(g) 0.01 parts by mass to 10 parts by mass of a tin-based curing catalyst.

2. The room-temperature-curable polyorganosiloxane composition according to claim 1,
wherein the main agent composition (A) further contains (d) 0.1 parts by mass to 100 parts by mass of polyorganosiloxane having a molecular end blocked with a vinyl group and/or methyl group and having a viscosity at 23°C of 0.1 Pa• s to 100 Pa• s.

3. The room-temperature-curable polyorganosiloxane composition according to claim 1 or 2,
wherein the curing agent composition (B) further contains (h) 0.1 parts by mass to 100 parts by mass of polyorganosiloxane having a molecular end blocked with a vinyl group and/or a methyl group and having a viscosity at 23°C of 0.1 Pa• s to 100 Pa• s.

4. The room-temperature-curable polyorganosiloxane composition according to any one of claims 1 to 3,
wherein a molar ratio (p/q) between the (R¹₃SiO_{1/2}) unit and the [Si(OH)ₓO_{(4-x)/2}] unit is 0.4 to 1.2 and a content of hydroxyl groups is 0.01 mass% to 10 mass%, in the polyorganosiloxane being the (c) component.

5. The room-temperature-curable polyorganosiloxane composition according to any one of claims 1 to 4,
wherein a mass average molecular weight (Mw) of the polyorganosiloxane being the (c) component is 500 to 20,000.

6. The room-temperature-curable polyorganosiloxane composition according to any one of claims 1 to 5,
wherein the filler being the (b) component contains calcium carbonate surface-treated with stearic acid or rosin acid.

7. The room-temperature-curable polyorganosiloxane composition according to any one of claims 1 to 6,
wherein the (a) component is a mixture of two or more kinds of polydiorganosiloxanes having the both molecular ends blocked with hydroxyl groups, different in viscosity.

8. The room-temperature-curable polyorganosiloxane composition according to any one of claims 1 to 7,
wherein a molar ratio (alkoxy groups/OH groups) between a total amount of alkoxy groups bonded to silicon atoms in the (e) component and the (f) component and a total amount of hydroxyl groups bonded to silicon atoms in the (a) component and the (c) component is5 to 50.
